# EUROPÄISCHE PATENTANMELDUNG

(11) **EP 1 355 069 A1**
(43) Veröffentlichungstag der Anmeldung: **22.10.2003**
(21) Anmeldenummer: 03405234.0
(22) Anmeldetag: 08.04.2003
(51) Int. Cl.: F16B 37/04

(54) **Schienenmutterprofil**

(30) Priorität: 19.04.2002 DE 10217554
(71) Anmelder: HILTI Aktiengesellschaft, 9494 Schaan (LI)
(72) Erfinder: Herb, Armin, 86974 Apfeldorf (DE); Hoffmann, Armin, 86899 Landsberg (DE); Unverzagt, Stefan, 86929 Penzing (DE)
(74) Vertreter: Wildi, Roland

(57) **Zusammenfassung**

Eine Befestigungsvorrichtung zum Befestigen von beispielsweise Rohren weist eine mit einem C-förmigen Querschnitt und eine Längsöffnung (2) versehene Montageschiene (3) und eine Halteplatte (1) auf. Die Halteplatte (1) weist eine, quer zur Längsöffnung (2) verlaufende, Durchgangsbohrung (8) mit einem Innengewinde (9) zur formschlüssigen Aufnahme eines Befestigungselements (12) auf. Ferner weist die Halteplatte (1) auf der, der Längsöffnung (2) zugewandten Seite (13), zumindest einen der Versteifung und der Positionierung dienenden Steg (14a, 14b) auf, um eine handliche und wirtschaftliche Befestigungsvorrichtung mit hohen Lastwerten (P) zu schaffen.

## Beschreibung

Die Erfindung betrifft eine Befestigungsvorrichtung zum Befestigen von Rohren oder dergleichen Gegenständen mit einer, einen C-förmigen Querschnitt sowie eine Längsöffnung aufweisenden, Montageschiene und mit einer Halteplatte, die eine, quer zur Plattenebene verlaufende, Durchgangsbohrung mit einem Innengewinde aufweist, wobei die Halteplatte eine, parallel zur Plattenebene verlaufende, Breite aufweist, die höchstens der Breite der Längsöffnung entspricht und senkrecht dazu eine, parallel zur Plattenebene verlaufende, Länge aufweist, die grösser als die Breite der Längsöffnung ausgebildet ist.

Befestigungsvorrichtungen der oben genannten Art finden insbesondere Anwendung beim Abhängen und Verstreben von Gegenständen, wie beispielsweise Rohren oder dergleichen. Auf einen Untergrund oder Bauteil wird eine Montageschiene mit einer Längsöffnung befestigt, beispielsweise durch mehrere Segmentanker. Zur Befestigung eines Befestigungselements an der Montageschiene wird eine Halteplatte durch die Längsöffnung in den Innenraum der Montageschiene eingeführt und um einen Winkel verschwenkt, beispielweise 90°, so dass das Halteteil die freien Enden, sogenannte Haltevorsprünge hintergreift. Das Halteteil weist zum Festlegen eines Befestigungselements, beispielsweise einer Gewindestange, eine Durchgangsbohrung mit einem Innengewinde auf, das in einen formschlüssigen Eingriff mit einer zumindest teilweise an dem Befestigungselement angeordneten Aussenprofilierung bringbar ist. Um ein Einführen des Halteteils durch die Längsöffnung zu gewährleisten, entspricht die Breite des Halteteils höchstens der Breite der Längsöffnung und dadurch, dass die sich senkrecht zur Breite des Halteteils erstreckende Länge grösser als die Breite der Längsöffnung ausgebildet ist, ist durch ein Verschwenken des in den Innenraum eingeführten Halteteils ein Hintergreifen der Haltevorsprünge der Montageschiene durch die Halteplatte möglich.

Aus dem allgemein bekannten Stand der Technik, beispielsweise der DE 38 11 974 C2 ist eine Befestigungsvorrichtung mit einer C-förmigen Montageschiene und einem unrunden Halteteil bekannt. Das Halteteil ist beispielsweise als Gussteil ausgebildet.

Nachteilig bei dieser allgemein bekannten Lösung ist, dass zur Herstellung des Halteteil relativ zu dessen Abmessungen viel Material aufgewendet werden muss, was einer wirtschaftlichen Herstellung der Befestigungsvorrichtung nicht dienlich ist.

Ferner wirkt sich die massive Bauweise der Halteplatte negativ auf das Gesamtgewicht der Befestigungsvorrichtung aus, insbesondere falls mehrere Halteplatten zur Anwendung gelangen.

Der vorliegenden Erfindung liegt die Aufgabe zugrunde, eine Befestigungsvorrichtung mit einer Montageschiene und einer Halteplatte zu schaffen, das wirtschaftlich herstellbar und ein geringes Gewicht aufweist und ausserdem eine hohe Stabilität gewährleistet, sowie ein gutes Zuglastverhalten aufweist.

Erfindungsgemäss wird die Aufgabe dadurch gelöst, dass die Halteplatte auf der, der Längsöffnung zugewandten Seite, zumindest einen der Versteifung und der Positionierung dienenden Steg aufweist.

Dadurch, dass die Halteplatte auf der der Längsöffnung der Montageschiene zugewandten Seite zumindest ein Steg zur Versteifung und Positionierung der Halteplatte angeordnet ist, ist die Ausbildung der Halteplatte auf eine Material sparende und gewichtssparende Art und Weise möglich. Der zumindest eine Steg stellt unter anderem auch die Möglichkeit der Positionierung eines zur Anwendung gelangenden Befestigungselements sicher. Das heisst durch den Steg ist beispielsweise ein axial zur Innenbohrung sich erstreckender Raum zur teilweisen Aufnahme des Befestigungselements sichergestellt. Damit ist es möglich das Befestigungselement ohne ein genaues Ablängen anzuwenden.

Weiter weist die erfindungsgemässe Halteplatte mit zumindest einem Steg bei einer Zugbelastung eines in der Halteplatte angeordneten Befestigungselements, beispielsweise einer Gewindestange, ein Gewölbe-ähnliches Tragverhalten auf. D. h., dass bei der Zugbelastung des Befestigungelements die Innenbohrung gegen die Gewindestange gedrückt wird und die Innenbohrung bei der Übernahme der auftretenden Belastung mithilft, so dass die Stabilität der Halteplatte gegenüber bisherigen Ausführungen von Halteplatten erhöht ist. Damit ergibt sich trotz der material- und gewichtssparenden Ausbildung der Halteplatte ein gutes Traglastverhalten.

Gleichzeitig ist der Platzbedarf der erfindungsgemässen Halteplatte in der Montageschiene geringer, als bei einer Halteplatte, welche beispielsweise aus einem Gussteil oder aus einem Blechteil, welches zur Sicherstellung der Stabilität mit einer oben angeordneten Verstärkung versehen ist, hergestellt ist.

Vorzugsweise sind zwei parallel zueinander verlaufende Stege vorgesehen, um eine ausreichende Stabilität der Halteplatte zu gewährleisten. Die Stege könne je nach Anforderungen unterschiedliche Querschnitte aufweisen, wie beispielsweise rundlich, rechteckig oder dergleichen. Betreffend der Abmessungen der Stege sind die für die Befestigungsvorrichtung vorgesehenen Rahmenbedingungen zu berücksichtigen.

Die Stege sind vorteilhafterweise beidseits des Innengewindes angeordnet, um eine optimale Stabilität gerade im Bereich des Innengewindes sicherzustellen, da dieses eine Schwächung der Halteplatte hervorruft.

Der Querschnitt der Halteplatte ist vorzugsweise U-förmig ausgebildet, wobei die freien Enden die Stege bilden. Diese Ausführung stellt bezüglich des Materialaufwandes und der Wirtschaftlichkeit das Optimum dar.

Die Stege bilden vorteilhafterweise, zumindest auf einer Seite des Innengewindes, eine Sicke, um eine Überlastung im Bereich des Innengewindes zu verhindern. Für Befestigungsvorrichtungen deren Belastbarkeit im Vordergrund stehen, sind die Stege beispielsweise über die gesamte Länge wellenförmig ausgebildet, um deren Stabilität zu erhöhen. Allerdings liegt der herstellungstechnische Aufwand für die Ausführung hoch. Ausserdem erfüllt die Sicke die Funktion einer Sollbiegestelle, um die Montageschiene und somit die Befestigungsvorrichtung vor einer Überlastung zu schützen.

Um eine wirtschaftliche Herstellung sicherzustellen, weist die Halteplatte vorzugsweise eine gleichmässige Wandstärke auf.

Vorteilhafterweise überragt die, der Längsöffnung abgewandte, Seite der Halteplatte, zumindest im Bereich des Innengewindes, den übrigen Bereich der, der Längsöffnung abgewandten Seite, um einerseits eine ausreichende axiale Erstreckung des Innengewindes zu ermöglichen und andererseits die sich axial zum Innengewinde erstreckende Höhe der Stege zu minimieren.

Die axiale Erstreckung des Innengewindes entspricht vorteilhafterweise etwa dem 1,5- bis 4,5-fachen, vorzugsweise dem 2,25-fachen der Wandstärke d der Halteplatte.

Um eine wirtschaftliche Herstellung der Befestigungsvorrichtung sicherzustellen ist das Halteteil vorteilhafterweise als Stanz-Biegeteil ausgebildet.

Vorteilhafterweise weist die Montageschiene an deren freien Rändern Ausnehmungen auf, deren lichte Weite zumindest der Wandstärke der Halteplatte entspricht. Die Halteplatte und insbesondere der oder die Stege der Halteplatte sind mit den Ausnehmungen an den freien Rändern der Montageschiene in Eingriff bringbar. Der oder die an der Halteplatte vorgesehenen Stege sind in Eingriff mit zumindest einer korrespondierenden Ausnehmung an den freien Rändern der Montageschiene bringbar, was eine Verschiebung der festgelegten Halteplatte in Längsrichtung der Montageschiene bei Einwirkung insbesondere von in Längsrichtung der Montageschiene wirkenden Kräften verhindert. Die Abstände der einzelnen Ausnehmungen an den freien Rändern sind bevorzugt auf die Abmessungen der Halteplatte abgestimmt. Die Ausnehmungen weisen vorzugsweise in Längsrichtung laufende, rechteckförmige Querschnitte auf.

Die Erfindung wird nachstehend anhand eines Ausführungsbeispieles näher erläutert. Es zeigen:
- Fig. 1: einen Querschnitt durch eine Befestigungsvorrichtung mit einem im Längsschnitt dargestellten Befestigungselement;
- Fig. 2: eine Aufsicht auf das in Fig. 1 dargestellte Halteelement;
- Fig. 3: einen Längsschnitt III-III des in Fig. 2 dargestellten Halteelements;
- Fig. 4: einen Querschnitt IV-IV des in Fig. 3 dargestellten Halteelements;
- Fig. 5: eine Aufsicht auf ein weiteres Halteelement mit Sicken;
- Fig. 6: eine Aufsicht auf ein Halteelement in einer Variante zu der in Fig. 1 dargestellten Befestigungsvorrichtung; und
- Fig. 7: einen Querschnitt VII-VII des in Fig. 6 dargestellten Halteelements.

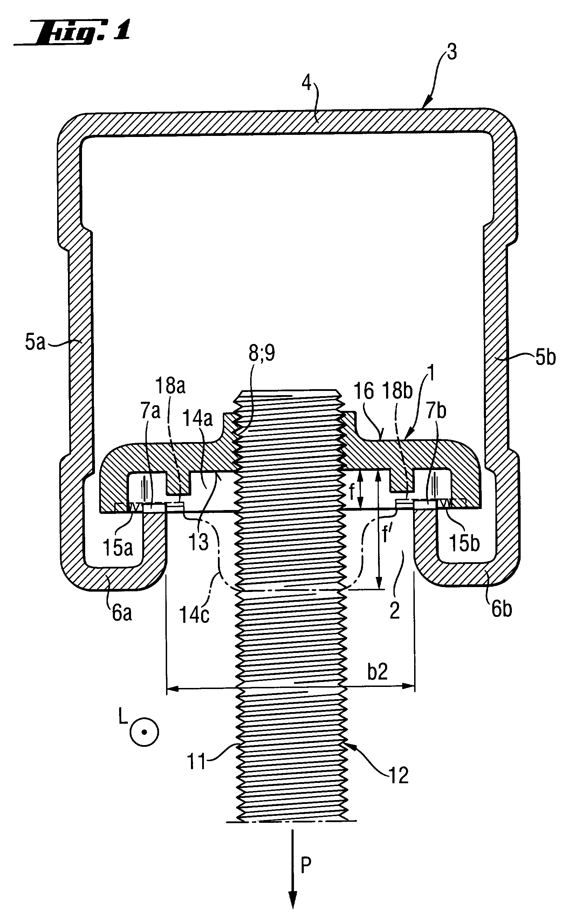

In den Fig. 1 bis 4 ist eine erfindungsgemässe Befestigungsvorrichtung mit einer, einen C-förmigen Querschnitt und eine Längsöffnung 2 aufweisenden, Montageschiene 3 und einer Halteplatte 1, dargestellt.

Die in Fig. 1 dargestellte längliche Montageschiene 3 weist einen im Wesentlichen C-förmigen Querschnitt auf, wobei die Montageschiene 3 vorzugsweise aus einem einzigen Band aus verzinktem oder rostfreien Stahlblech geformt ist. Die Montageschiene 3 weist eine Rückwand 4 und zu beiden Längsseiten etwa senkrecht davon abragende Seitenwände 5a bzw. 5b auf. An ihren freien Vorderenden sind die Seitenwände 5a, 5b etwa rechtwinklig umgeknickt und bilden parallel zur Rückwand 4 verlaufende Stege 6a bzw. 6b, welche die in Längsrichtung L der Montageschiene 3 verlaufenden Längsöffnung 2 bilden. Die der Rückwand 4 zugewandte Seite der Stege 6a, 6b kann mit Rändelungen 7a, 7b versehen sein.

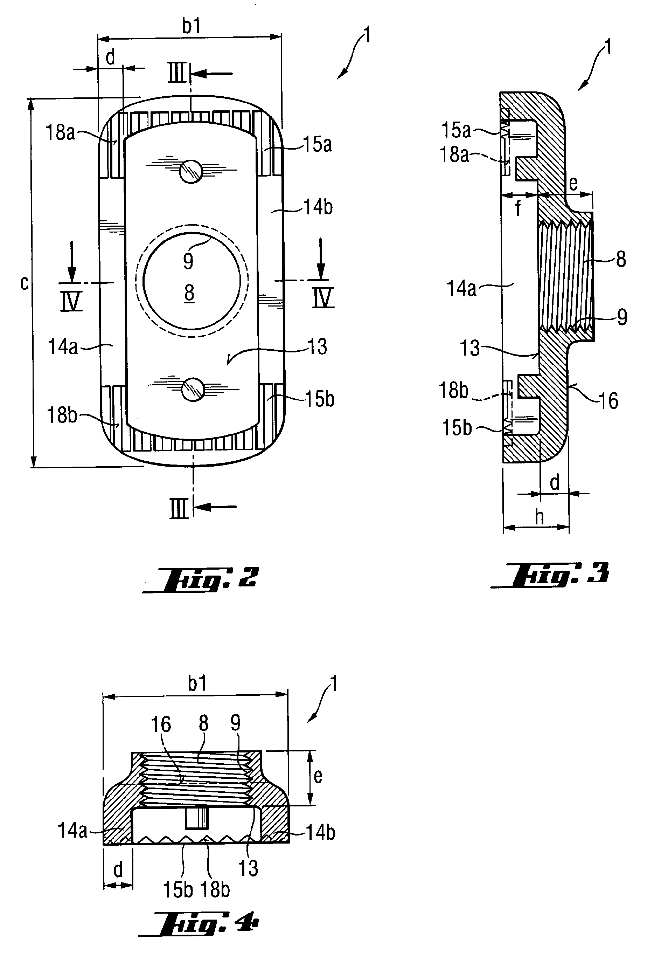

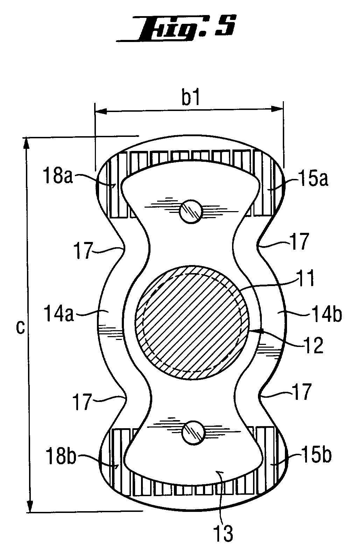

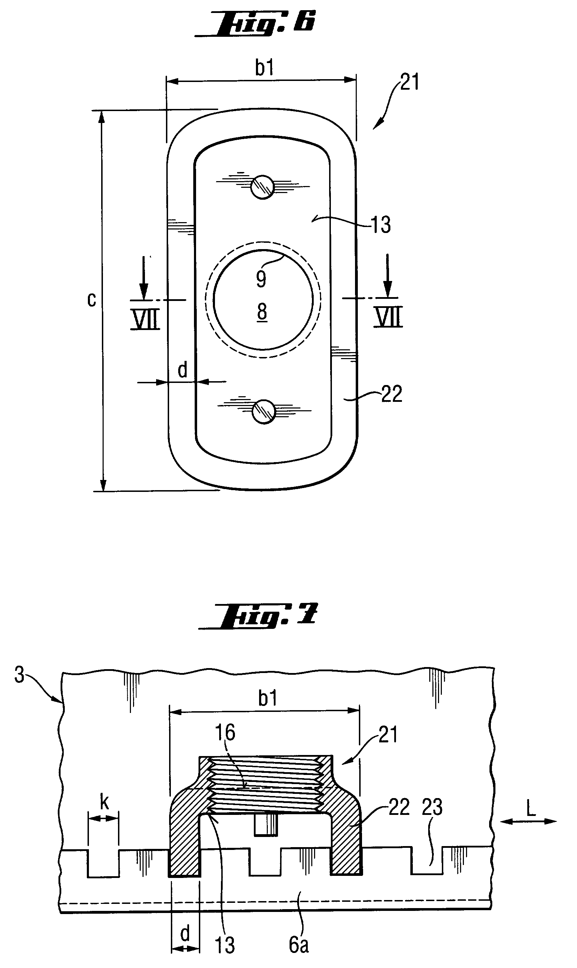

Die Halteplatte 1 weist eine, quer zur Plattenebene verlaufende, Durchgangsbohrung 8 mit einem Innengewinde 9 auf, wie dies insbesondere aus den Fig. 2 bis 4 hervorgeht. Die Durchgangsbohrung dient der formschlüssigen Aufnahme eines Befestigungselements, insbesondere eines mit einem Aussengewinde 11 versehenen Bolzens 12, wie er in Fig. 1 und 5 dargestellt ist. Die Halteplatte 1 weist eine, parallel zur Plattenebene verlaufende, Breite b1 auf, die etwa der Breite b2 der Längsöffnung 2 entspricht und weist senkrecht dazu eine, parallel zur Plattenebene verlaufende, Länge c auf, die grösser als die Breite b2 der Längsöffnung 2 ausgebildet ist. Die Halteplatte 1 weist ausserdem eine gleichmässige Wandstärke d auf.

Die im Querschnitt U-förmige Halteplatte 1 weist auf der, der Längsöffnung 2 zugewandten Seite 13, zwei der Versteifung und der Positionierung dienende Stege 14a, 14b auf, welche im Querschnitt, der insbesondere in der Fig. 4 dargestellt ist, die freien Schenkel bilden. Die Stege 14a, 14b sind als senkrecht zu der der Längsöffnung 2 zugewandten Seite 13, in Längsrichtung der Halteplatte 1 verlaufend ausgebildet und weisen eine Höhe f auf.

In Abhängigkeit der vorhandenen, konstruktiven Abmessungen und der Verwendung des mit der Halteplatte 1 angeordneten Befestigungsmittels (z. B. des Bolzens 12) können die Stege 14a, 14b bereichsweise gegenüber den Auflagebereichen 15a, 15b vorstehen. Die bereichsweise als Positionierhilfe und Versteifung dienende Stegerhöhung 14c ist als Ausführungsvariante in der Fig. 1 schematisch mittels Strich-Punktlinien angedeutet. Die axiale Erstreckung f' der Stegerhöhung 14c und die Wandstärke d der Halteplatte 1 ist bei einer solchen Ausführung der Halteplatte 1 grösser als die Höhe h, welche dem Mass von den Auflagebereichen 15a, 15b bis zur Oberfläche 16 der Halteplatte 1 entspricht.

Die, der Längsöffnung 2 abgewandten, Seite 16 der Halteplatte 1 überragt im Bereich des Innengewindes 9, den übrigen Bereich dieser Seite 16, wie dies insbesondere aus Fig. 3 und 4 ersichtlich ist. Die axiale Erstreckung e des Innengewindes 9 entspricht etwa dem 2,25-fachen der Wandstärke d. Das Halteteil 1 ist beispielsweise als Stanz-Biegeteil ausgebildet.

Die Auflagebereiche 15a, 15b weisen vorzugsweise eine Rändelung 18a, 18b auf, die mit der Rändelung 7a, bzw. 7b an den freien Rändern der Stege 6a und 6b der Montageschiene 3 in Eingriff bringbar sind.

Die in Fig. 5 dargestellte Ausführung weist an den Stegen 14a, 14b zusätzlich zwei das Innengewinde 9 berandende Sicken 17 auf. Die Sicken 17 dienen einerseits der Stabilisierung des Innengewindes 9 und andererseits als Überlastschutz für die Befestigungsvorrichtung. Greift am Befestigungselement, insbesondere am Bolzen 12, eine zu hohe Last P an, so führt dies im Bereich der Sicken 17 zu einem Einknicken der Halteplatte 1. Dieser Überlastschutz verhindert, dass durch eine unzulässig hoch angebrachte Last P die gesamte Befestigungsvorrichtung versagt.

Die in Fig. 6 dargestellte Halteplatte 21 weist im Gegensatz zu der, in den Fig. 2 und 5 gezeigten, Halteplatte 1 nur einen, umlaufenden Steg 22 auf, welcher auf der, der Längsöffnung 2 zugewandten Seite 13 der Halteplatte 21 angeordnet ist. Auf eine Rändelung im Auflagebereich 15a, 15b kann bei der Halteplatte 21 verzichtet werden.

Wie aus der Fig. 7 in einer Ansicht des Stegs 6a der Montageschiene 3 ersichtlich ist, weist der freie Rand der Stege 6a, 6b der Montageschiene 3 anstelle einer gerändelten Oberfläche eine Zahnung 23 auf. Die Breite k der einzelnen Vertiefungen der Zahnung 23 sind nur geringfügig breiter als die Wandstärke d der Halteplatte 21. Der Abstand der einzelnen Vertiefungen der Zahnung 23 ist auf die Abmessung b1 abgestimmt, damit der Steg 22 in diese Vertiefungen eingreifen kann und die Halteplatte 21 gegen in Längsrichtung L der Montageschiene 3 wirkende Kräfte gehalten ist.

## Patentansprüche

1. Befestigungsvorrichtung zum Befestigen von Rohren oder dergleichen Gegenständen mit einer, einen C-förmigen Querschnitt sowie eine Längsöffnung (2) aufweisenden, Montageschiene (3) und mit einer Halteplatte (1; 21), die eine quer zur Plattenebene verlaufende, Durchgangsbohrung (8) mit einem Innengewinde (9) aufweist, wobei die Halteplatte (1; 21) eine, parallel zur Plattenebene verlaufende, Breite (b1) aufweist, die höchstens der Breite (b2) der Längsöffnung (2) entspricht und senkrecht dazu eine, parallel zur Plattenebene verlaufende, Länge (c) aufweist, die grösser als die Breite (b2) der Längsöffnung (2) ausgebildet ist, **dadurch gekennzeichnet, dass** die Halteplatte (1; 21) auf der, der Längsöffnung (2) zugewandten Seite (13), zumindest einen der Versteifung und der Positionierung dienenden Steg (14a, 14b; 22) aufweist.

2. Befestigungsvorrichtung nach Anspruch 1, **dadurch gekennzeichnet, dass** zwei parallel zueinander verlaufende Stege (14a, 14b) vorgesehen sind.

3. Befestigungsvorrichtung nach Anspruch 2, **dadurch gekennzeichnet, dass** die Stege (14a, 14b) beidseits des Innengewindes (9) angeordnet sind.

4. Befestigungsvorrichtung nach Anspruch 3, **dadurch gekennzeichnet, dass** der Querschnitt der Halteplatte (1; 21) U-förmig ausgebildet ist, wobei die freien Enden die Stege (14a, 14b; 22) bilden.

5. Befestigungsvorrichtung nach einem der Ansprüche 1 bis 4, **dadurch gekennzeichnet, dass** die Stege (14a, 14b; 22) zumindest auf einer Seite des Innengewindes (9) eine Sicke (17) bilden.

6. Befestigungsvorrichtung nach einem der Ansprüche 1 bis 5, **dadurch gekennzeichnet, dass** die Halteplatte (1; 21) eine gleichmässige Wandstärke (d) aufweist.

7. Befestigungsvorrichtung nach einem der Ansprüche 1 bis 6, **dadurch gekennzeichnet, dass** die, der Längsöffnung (2) zugewandten Seite (16) die Halteplatte (1; 21), zumindest im Bereich des Innengewindes (9), den übrigen Bereich der, der Längsöffnung (2) abgewandten, Seite (16) überragt.

8. Befestigungsvorrichtung nach einem der Ansprüche 1 bis 7, **dadurch gekennzeichnet, dass** die axiale Erstreckung (e) des Innengewindes (9) etwa dem 1,5- bis 4,5-fachen der Wandstärke (d) entspricht.

9. Befestigungsvorrichtung nach einem der Ansprüche 1 bis 8, **dadurch gekennzeichnet, dass** das Halteteil (1; 21) als Stanz-Biegeteil ausgebildet ist.

10. Befestigungsvorrichtung nach einem der Ansprüche 1 bis 9, **dadurch gekennzeichnet, dass** die Montageschiene (3) an deren freien Rändern Ausnehmungen (23) aufweist, deren lichte Weite zumindest der Wandstärke (d) der Halteplatte (21) entspricht, und die Halteplatte (21), insbesondere der Steg (22) mit den Ausnehmungen (23) an den freien Rändern der Montageschiene (3) in Eingriff bringbar ist.
